# EUROPÄISCHE PATENTANMELDUNG

(11) **EP 1 389 824 A1**
(43) Veröffentlichungstag der Anmeldung: **18.02.2004**
(21) Anmeldenummer: 03018204.2
(22) Anmeldetag: 09.08.2003
(51) Int. Cl.: H02K 7/10, H02K 7/14

(54) **ELEKTROMASCHINENSYSTEM**

(30) Priorität: 16.08.2002 DE 10238336
(71) Anmelder: Flender Tübingen GmbH, 72072 Tübingen (DE)
(72) Erfinder: Raster, Thomas, 72076 Tübingen (DE); Ehrmann, Michael, 72074 Tübingen (DE)
(74) Vertreter: Radünz, Ingo, Dipl.-Ing.

(57) **Zusammenfassung**

Es wird eine Motorreihe angegeben, insbesondere zum Anbau an Getriebe, für Wechselstrommotoren in verschiedenpoliger Ausführung und in unterschiedlichen Leistungsklassen, Spannungsklassen und Frequenzklassen. Die Motorreihe umfaßt jeweils ein Motorgehäuse (2) mit angeformten Rippen (3) und einen Motor-Klemmenkasten (8) mit einem Klemmenbrett (9) für den Anschluß einer Spannung für die Versorgung von im Motorgehäuse rotationssymmetrisch untergebrachten Statorwicklungen mit Spannung und einen Rotor, der mit seiner Welle in Lagerschilden (5.1; 5.2) und innerhalb des Motorgehäuses mit kleinstem Abstand zu den Statorwicklungen drehbar gelagert ist, mit einer Antriebsseite als Getriebeschnittstelle (4) und einer Nichtantriebsseite oder Belüftungsseite. Dabei ist die Motorreihe jeweils aus einem Rumpfmotor (1) als Grundmodul aufgebaut, wobei ein nichtantriebsseitiges Einheits-Motor-Wellenende (6) des Rumpfmotors (1) für verschiedene Anbauwellen (16, 22, 23, 25,28,29) ausgelegt ist und auf den verschiedenen Anbauwellen (16, 22, 23,25,28,29) verschiedenartige Anbauteile und Zusatzteile angeordnet sind. Das nichtantriebseitige Lagerschild (5.2) des Rumpfmotors (1) ist mit Befestigungsschrauben (7) für die Montage unterschiedlicher Lüfterhauben (12,14,18,19,24) ausgerüstet.

## Beschreibung

Die Erfindung betrifft eine Motorreihe, insbesondere eine Motorreihe zum Anbau an Getriebe, für Wechselstrommotoren in verschiedenpoliger Ausführung, in unterschiedlichen Leistungsklassen, Spannungsklassen und Frequenzklassen.

Für eine kostengünstige Fertigung und eine wirtschaftliche Lagerhaltung wird besonders angestrebt, die verschiedenen Motoren einer Motorreihe mit möglichst vielen unterschiedlichen Anbauteilen und Zusatzteilen nach einem allgemeinen Aufbau auszugestalten, um eine große Anzahl von Motorvarianten zu erhalten, die sich hinsichtlich der einzelnen Funktionen und Wirkungsweisen stark unterscheiden.

Bisher ist es erforderlich, dass komplette Motorvarianten oder eine Vielfalt unterschiedlicher Motorhauptbestandteile, wie z.B. Ständer, Klemmenkasten, Läufer, Lagerschilde usw., mit den entsprechenden Funktionen und Wirkungsweisen in Einzelfertigung hergestellt werden und in unwirtschaftlicher Lagerhaltung auf Vorrat gehalten werden müssen.

Der vorliegenden Erfindung liegt die Aufgabe zugrunde, eine Motorreihe für Wechselstrommotoren in verschiedenpoliger Ausführung, unterschiedlichen Leistungsklassen, Spannungsklassen, Frequenzklassen und einer sehr großen Vielfalt typischer Motorspezifikationen oder Zusatzfunktionen zu schaffen, welche die Anforderungen nach kostengünstiger Fertigung und wirtschaftlicher Lagerhaltung ohne Beschränkung des Leistungsbereiches und Funktionsbereiches und des geforderten Einsatzbereiches der Motoren in besonderem Maße erfüllt.

Die Aufgabe wird mit einer Motorreihe der eingangs genannten Art durch die Merkmale des kennzeichnenden Teiles des Anspruchs 1 gelöst.

Vorteilhafte Ausgestaltungen der Erfindung sind in den Unteransprüchen angegeben.

Bei der erfindungsgemäßen Motorreihe ist es möglich, je nach geforderter Polzahl, erforderlicher Leistungsklasse, Spannungsklasse und Frequenzklasse des jeweiligen Motors die notwendigen Anbauteile und Zusatzteile, also Lüfter, Bremsvorrichtungen, Gebereinrichtungen, Rücklaufsperren sowie zweites Motorwellenende oder Kombinationen dieser unterschiedlichen Anbauteile und Zusatzteile an einem Rumpfmotor in einfacher Weise anzubauen, um auf diese Art die geforderte komplette Motorvariante zusammenzubauen. Dadurch wird eine Variationsbreite mit einem Grundmodul "Rumpfmotor" im Motorenbau oder allgemein im Bau von drehenden elektrischen Maschinen eingeführt, die in dieser Form bisher nicht zur Verfügung steht.

Weitere Vorteile in bezug auf die Fertigungskosten und die wirtschaftliche Lagerhaltung lassen sich insbesondere dadurch erzielen, dass die verwendeten Anbauteile und Zusatzteile, die jeweils austauschbar sind, lediglich nur einmal hergestellt und auf Vorrat gehalten werden müssen. Fallweise sind die Anbauteile und Zusatzteile außerdem für mehrere Motorbaugrößen austauschbar. Daher können die Anbauteile und Zusatzteile sogar für mehrere Motorbaugrößen hergestellt werden. Aufgrund der wenigen auf Vorrat zu haltenden Anbauteile und Zusatzteile lassen sich die Kosten für die Fertigung sowie die Lagerhaltung auf eine wirtschaftlich vorteilhafte Größe stark senken.

Für eine weitere Vereinheitlichung der benötigten Bauteile weist das Lagerschild auf der Nichtantriebsseite oder NS-Seite oder der sogenannten Belüftungsseite oder BS-Seite des Motors jeweils einer Motorbaugröße eine einheitliche Gestaltung auf, und zwar unabhängig von den unterschiedlichen Leistungsklassen, der für die Drehzahlen maßgeblichen Polzahlen und der unterschiedlichen wahlweisen Funktion und Wirkungsweise des Motors. Danach wird eine kostengünstige Fertigung und wirtschaftliche Lagerhaltung dadurch erreicht, daß die verschiedenen Motoren einer Motorbaugröße mit möglichst vielen gleichartigen Anbauteilen und Zusatzteilen nach dem Baukastenprinzip aufgebaut werden können.

Weitere Vorteile der Erfindung sind anhand der in der Zeichnung dargestellten verschiedenen Ausführungsbeispiele näher erläutert. Es zeigen:
- Fig. 1: einen Rumpfmotor für Zusammenstellungen mit verschiedenen Anbauteilen und Zusatzteilen in schematischer Darstellung gemäß der Erfindung;
- Fig. 2: eine Motorvariante mit dem Anbauteil Eigenlüfter gemäß der Erfindung;
- Fig. 3: eine Motorvariante mit dem Anbauteil Fremdlüfter gemäß der Erfindung;
- Fig. 4: eine Motorvariante mit den Anbauteilen Bremsvorrichtung und Eigenlüfter gemäß der Erfindung;
- Fig. 4.1: eine Anbauwelle für die Motorvariante nach Fig. 4;
- Fig. 5: eine Motorvariante mit den Anbauteilen Bremsvorrichtung und Fremdlüfter gemäß der Erfindung;
- Fig. 6: eine Motorvariante mit den Anbauteilen Rücklaufsperre und Eigenlüfter gemäß der Erfindung;
- Fig. 6.1: eine Anbauwelle für die Motorvariante nach Fig. 6 entsprechend Fig. 4.1;
- Fig. 7: eine Motorvariante mit den Anbauteilen Bremsvorrichtung, Eigenlüfter und Gebereinrichtung gemäß der Erfindung;
- Fig. 7.1: eine Anbauwelle für die Motorvariante nach Fig. 7;
- Fig. 8: eine Motorvariante mit den Anbauteilen Bremsvorrichtung, Gebereinrichtung und Fremdlüfter gemäß der Erfindung;
- Fig. 8.1: eine Anbauwelle für die Motorvariante nach Fig. 8;
- Fig. 9: eine Motorvariante mit den Anbauteilen Bremsvorrichtung, Eigenlüfter und zweites Wellenende nach der Erfindung;
- Fig. 9.1: eine Anbauwelle für die Motorvariante nach Fig. 9;
- Fig. 10: eine Motorvariante mit den Anbauteilen Eigenlüfter und Gebereinrichtung nach der Erfindung;
- Fig. 10.1: eine Anbauwelle für die Motorvariante nach Fig. 10;
- Fig. 11: eine Motorvariante mit den Anbauteilen Gebereinrichtung und Fremdlüfter nach der Erfindung;
- Fig. 11.1: eine Anbauwelle für die Motorvariante nach Fig. 11 entsprechend Fig. 10.1;
- Fig. 12: eine Motorvariante mit den Anbauteilen Eigenlüfter und zweites Wellenende nach der Erfindung und
- Fig. 12.1: eine Anbauwelle für die Motorvariante nach Fig. 12.

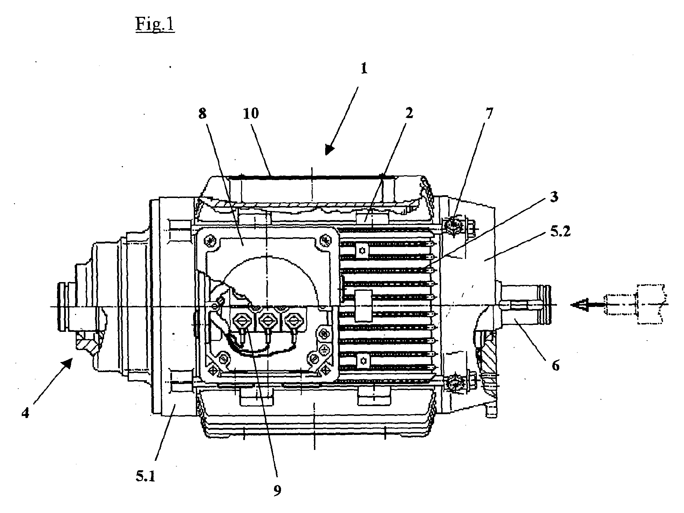

In Fig. 1 ist ein Rumpfmotor 1 mit einem Motorgehäuse 2, vorzugsweise aus Aluminium-Druckguß in formstabiler Konstruktion, mit Rippen 3 zur Oberflächenkühlung des Rumpfmotors 1 dargestellt. Der Rumpfmotor 1 umfaßt auf der einen Seite, der Antriebsseite oder AS-Seite, ein Lagerschild 5.1 und eine Antriebsschnittstelle oder Getriebeschnittstelle 4, insbesondere für den direkten Getriebeanbau, und auf der anderen Seite, der Nichtantriebsseite oder NS-Seite bzw. BS-Seite, ein Einheits-Lagerschild 5.2. In den Lagerschilden 5.1 und 5.2 ist der Läufer des Rumpfmotors 1 gelagert, der auf der sogenannten BS-Seite ein Einheits-Wellenende 6 für die verschiedenen Anbauwellen aufweist. Das Wellenende 6 ist für verschiedene Anbauwellen konstruktiv so gestaltet, dass sich in dem Wellenende 6 eine Anbaugestaltung, z.B. eine glatte Bohrung oder ein Gewinde oder dergleichen, für dort anzubringende kraftschlüssige oder formschlüssige Anbauwellen befindet. Die Oberfläche des Wellenendes 6 ist so ausgeführt, dass Anbauteile ohne mechanische Bearbeitung befestigt werden können.

Weiterhin sind in Fig. 1 Befestigungsschrauben 7 vorzugsweise in der Ausführung als Multiturn-Schrauben für eine hier nicht dargestellte Lüfterhaube gezeigt, die vorteilhafterweise über eine Bajonett-Befestigung montiert wird. Dabei sind die Multiturn-Schrauben bevorzugterweise im Lagerschild 5.2 des Rumpfmotors 1 vormontiert.

Weiter ist in Fig.1 ein Motor-Klemmenkasten 8 in teilweise aufgebrochener Darstellung gezeigt. Der Klemmenkasten 8 ist konstruktiv so ausgestaltet, dass die Kabeleinführung auch für den elektrischen Anschluß von Anbauteilen ohne weitere mechanische Bearbeitung durchgeführt werden kann. Darüber hinaus läßt sich der Klemmenkasten 8 um jeweils 90° auf der Anbaufläche drehen, ohne dass für die Kabeleinführung eine mechanische Bearbeitung notwendig ist. Dabei ist ein Klemmbrett 9 vorzugsweise sechspolig ausgeführt. Weiterhin sind ein kompletter Schutzleiteranschluss und Befestigungsmöglichkeiten für Anschlußelemente von Einbauteilen, wie beispielsweise Gleichrichter, Kondensator oder dergleichen, Anbauteilen und Zusatzteilen vorhanden. Zusätzlich sind auf der Oberfläche des Rumpfmotors 1 mehrere Befestigungsvorrichtungen für Leistungsschilder vorhanden. Dabei ist ein Leistungsschild 10 angedeutet.

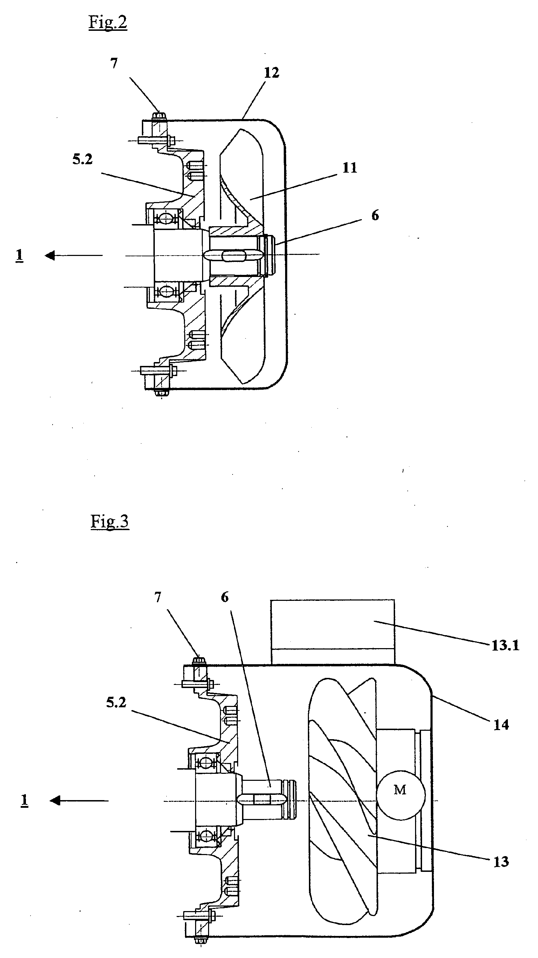

Fig. 2 zeigt lediglich das Einheits-Lagerschild 5.2 und das Wellenende 6 des Rumpfmotors 1 mit einem Eigenlüfter 11 aus vorzugsweise glasfaserverstärktem Kunststoff für die Eigenbelüftung. Der Eigenlüfter 11 ist über eine Nutverbindung auf dem Wellenende 6 des Rumpfmotors 1 angeordnet. Weiterhin ist eine erste Lüfterhaube 12 dargestellt, die an den Befestigungsschrauben 7 des Lagerschildes 5.2 des Rumpfmotors 1 über eine Bajonett-Befestigung montiert ist.

In Fig. 3 ist eine Motorvariante mit dem Anbauteil Fremdlüfter 13 mit Klemmenkasten 13.1 dargestellt. Der Fremdlüfter 13 ist an der dem Wellenende 6 des Rumpfmotors 1 gegenüberliegenden Innenseite einer zweiten Lüfterhaube 14 angebracht. Dabei ist der Klemmenkasten 13.1 des Fremdlüfters 13 vorzugsweise mit einem Kondensator ausgeführt, so daß der Motor des Fremdlüfters wahlweise mit Drehstrom oder Einphasen-Wechselstrom zu betreiben ist.

Gie Fremdlüfter 13 werden vorzugsweise eingesetzt, wenn für Motoren die Belüftung durch Eigenlüfter nicht ausreicht, beispielsweise bei Schalthäufigkeit, Umrichterbetrieb usw., oder konstruktiv nicht möglich ist. Die Lüfterhaube 14 umgibt das Wellenende 6 und den Fremdlüfter 13 und ist wiederum an den Befestigungsschrauben 7 des Lagerschildes 5.2 des Rumpfmotors 1 über eine Bajonett-Befestigung montiert.

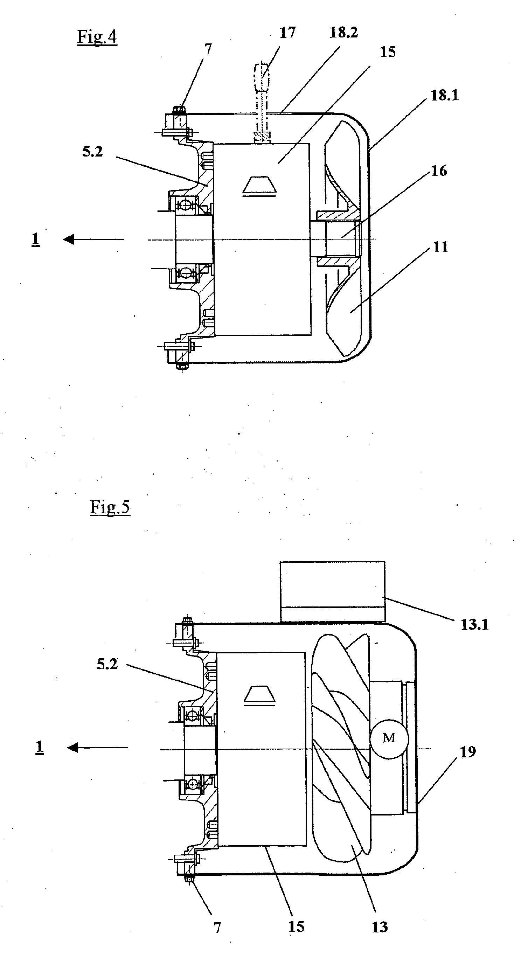

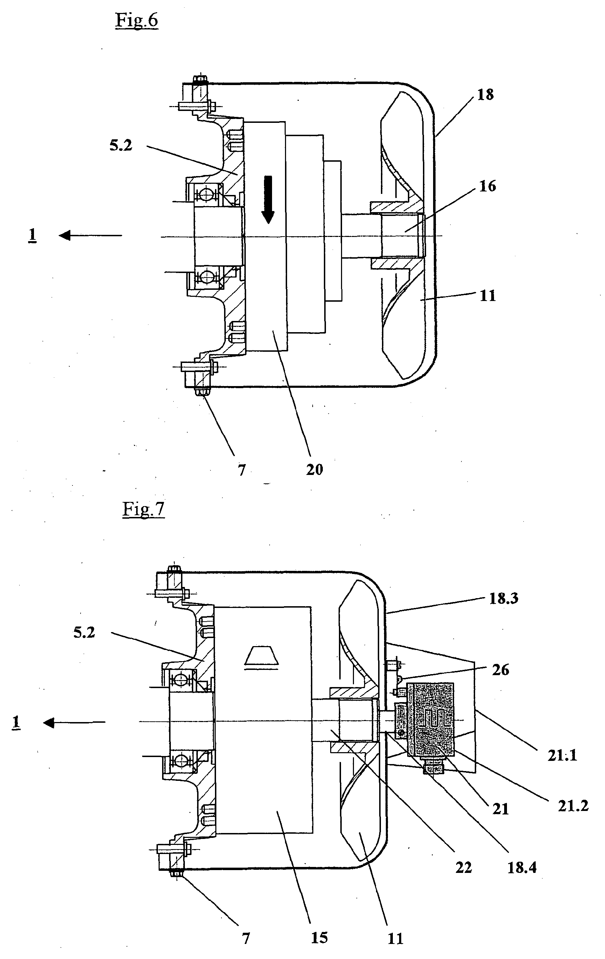

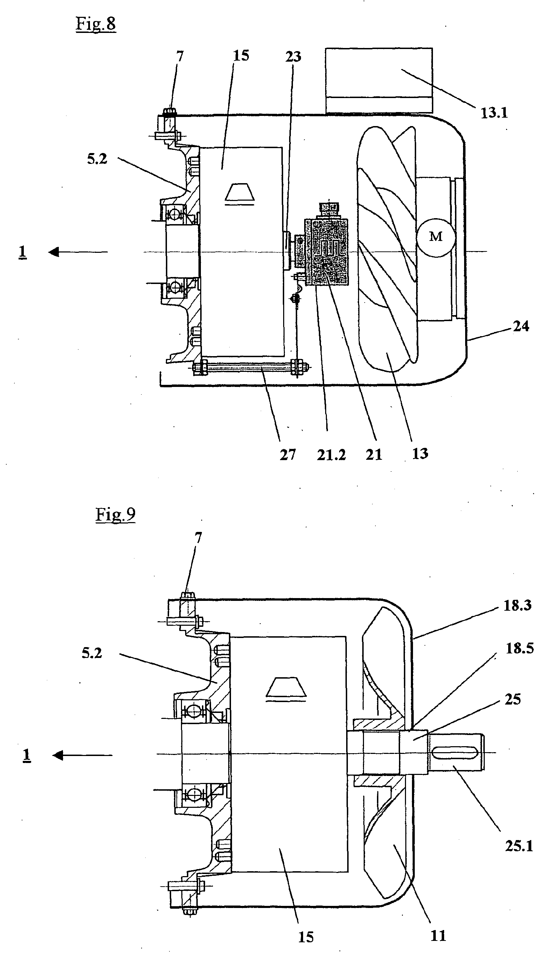

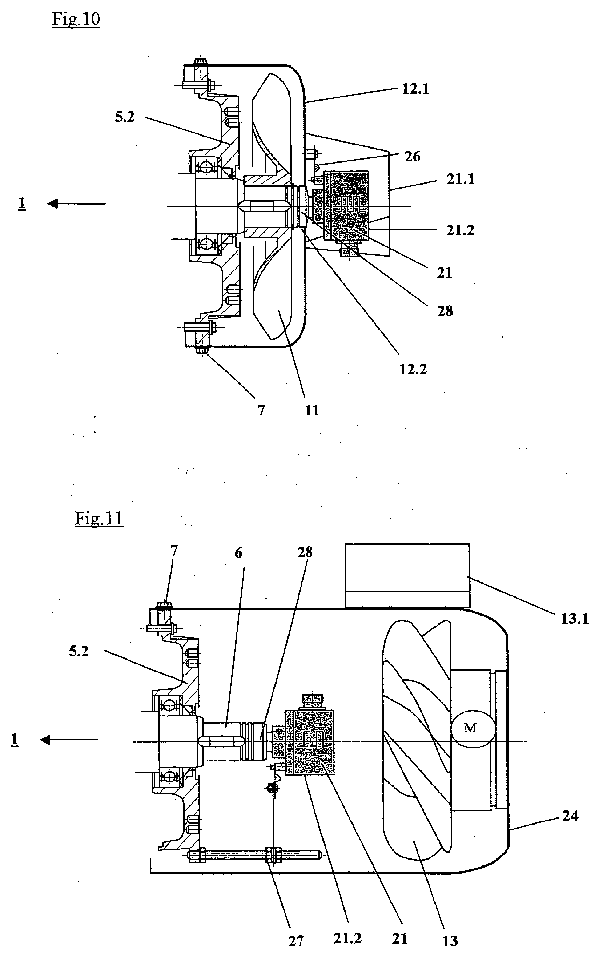

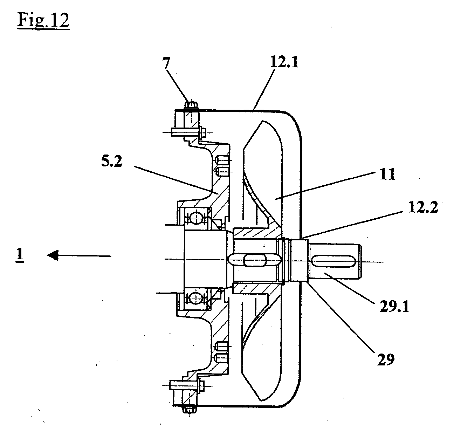

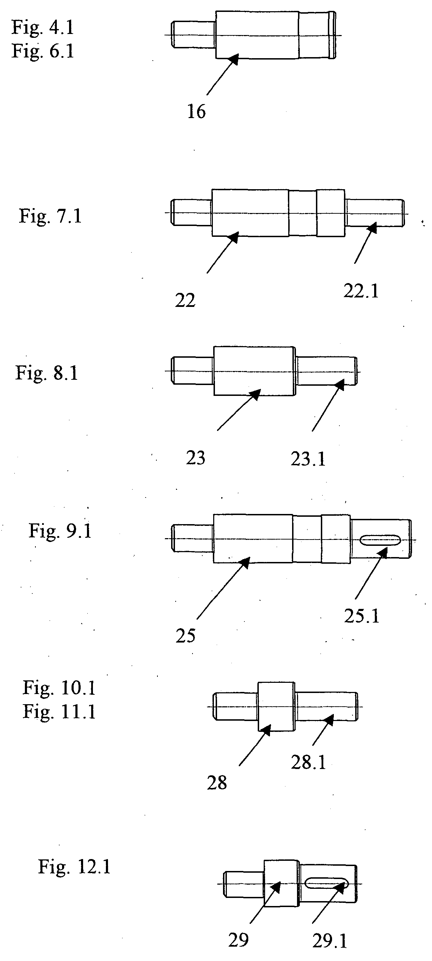

Eine weitere Motorvariante ist in Fig. 4 gezeigt, wobei als Anbauteile eine Bremsvorrichtung 15, beispielsweise eine elektro-mechanische Bremse oder dergleichen, und der Eigenlüfter 11 für die Eigenbelüftung auf einer ersten Anbauwelle 16 gemäß Fig. 4.1 angeordnet sind. Der Eigenlüfter 11 ist auf der Anbauwelle 16 vorzugsweise durch eine kraftschlüssige Verbindung mittels Toleranzring befestigt. Die Anbauwelle 16 ist mit dem nicht sichtbaren Wellenende 6 des Rumpfmotors 1 vorteilhafterweise durch Press-/Klebeverbindung verbunden. Der Rotor der Bremsvorrichtung ist vorzugsweise mit einer Nutverbindung auf dem Wellenende 6 des Rumpfmotors 1 angebracht. Dabei ist das Gehäuse der Bremsvorrichtung 15 am Einheits-Lagerschild 5.2 mit Schrauben befestigt, und zwar vorzugsweise mit selbstschneidenden Schrauben, die mit im Lagerschild 5.2 vorgesehenen Bohrungen in Eingriff stehen. Die Bremsvorrichtung 15 kann wahlweise mit einem angedeuteten Handlüfthebel 17 gelüftet werden, der aus einer mit einem Schlitz 18.2 versehenen dritten Lüfterhaube 18.1 herausragt. Die mit dem Schlitz 18.2 versehene dritte Lüfterhaube 18.1 umgibt die Bremsvorrichtung 15 und den Eigenlüfter 11 schützend und ist wiederum an den Befestigungsschrauben 7 des Lagerschildes 5.2 des Rumpfmotors 1 über eine Bajonett-Befestigung montiert ist.

Getriebemotoren werden wahlweise mit motorseitig auf der BS-Seite angebauter elektro-mechanischer Bremsvorrichtung 15 ausgerüstet. Vorzugsweise wird eine Federdruck-Scheibenbremse eingesetzt, wobei mit Hilfe der Handlüftung ein manuelles Lüften anstelle des sonst üblichen Lüftens auf elektromagnetischem Wege möglich ist, beispielsweise bei Stromausfall oder bei durchzuführenden Positionierarbeiten. Alternativ können andere, beispielsweise arbeitsstrombetätigte Bremsvorrichtungen angebaut werden.

Fig. 5 zeigt die Motorvariante mit den Anbauteilen elektro-mechanische Bremsvorrichtung 15, angeordnet auf dem nicht sichtbaren Wellenende 6 des Rumpfmotors 1 über eine Nutverbindung, und Fremdlüfter 13 mit dem Klemmenkasten 13.1. Dabei ist der Fremdlüfter 13 wiederum an der Innenseite einer vierten Lüfterhaube 19 in axialer Lage zu der Bremsvorrichtung 15 angeordnet. Die Lüfterhaube 19 umgibt schützend die Bremsvorrichtung 15 und den Fremdlüfter 13 und ist ebenfalls an den Befestigungsschrauben 7 des Lagerschildes 5.2 des Rumpfmotors 1 über eine Bajonett-Befestigung montiert.

In Fig. 6 ist eine Motorvariante mit den Anbauteilen einer Rücklaufsperre 20 und dem Eigenlüfter 11 gezeigt. Motoren mit mechanischer Rücklaufsperre werden verwendet, wenn ein Rücklauf, insbesondere des abgeschalteten Antriebes, verhindert werden soll. Bei der gezeigten Ausführung sind die Rücklaufsperre 20 und der Eigenlüfter 11 auf der gemäß Fig. 6.1 entsprechend Fig. 4.1 gezeigten ersten Anbauwelle 16 angeordnet, die mit dem nicht sichtbaren Wellenende 6 des Rumpfmotors 1 verbunden ist. Die Anbauteile werden wiederum von einer dritten Lüfterhaube 18 geschützt, die an den Befestigungsschrauben 7 des Lagerschildes 5.2 des Rumpfmotors 1 über eine Bajonett-Befestigung montiert ist.

Ein weiteres Ausführungsbeispiel einer Motorvariante ist in Fig. 7 dargestellt. Bei dieser Ausführung sind als Anbauteile die Bremsvorrichtung 15 und der Eigenlüfter 11 sowie ein Anbauteil Gebereinrichtung 21 mit Geberschutzhaube 21.1 auf einer zweiten Anbauwelle 22 gemäß Fig. 7.1 hintereinander angeordnet. Dabei ragt ein Wellenende 22.1 der zweiten Anbauwelle 22 mit der darauf angeordneten Gebereinrichtung 21 aus der mit einer Bohrung 18.4 versehenen dritten Lüfterhaube 18.3 heraus, welche die Anbauteile Bremsvorrichtung 15 und Eigenlüfter 11 umgibt und über eine Bajonett-Befestigung an den Befestigungsschrauben 7 des Lagerschildes 5.2 des Rumpfmotors 1 montiert ist. Das Gebergehäuse 21.2 der Gebereinrichtung 21 ist mittels einer ersten Drehmomentstütze 26 verdrehsicher an der dritten Lüfterhaube 18.3 angebaut. Die Gebereinrichtung 21 ist unter der Geberschutzhaube 21.1 geschützt angebaut, die ihrerseits an der Lüfterhaube 18.3 befestigt ist.

Die Gebereinrichtung 21 kann beispielsweise ausgeführt werden als Absolutwertgeber, Inkrementalgeber, Tachogenerator, Näherungsschalter in induktiver, kapazitiver, optischer usw. Ausgestaltung, Fliehkraftschalter und dergleichen. Das Wellenende 22.1 der zweiten Anbauwelle 22 ist stets so ausgeführt, daß für die Motorbaureihe immer die gleiche Gebereinrichtung 21 verwendet werden kann. Der Rotor der Gebereinrichtung 21 ist vorzugsweise mittels Klemmring auf dem Wellenende 22.1 der zweiten Anbauwelle 22 befestigt. Die Befestigung der Geberschutzhaube 21.1 ist so gestaltet, daß diese für mehrere Motorbaugrößen verwendet werden kann.

Als weiteres Ausführungsbeispiel ist in Fig. 8 eine Motorvariante mit den Anbauteilen Bremsvorrichtung 15 und Gebereinrichtung 21 sowie Fremdlüfter 13 mit Klemmenkasten 13.1 gezeigt. Bei dieser Anordnung sitzen die Bremsvorrichtung 15 und die Gebereinrichtung 21 auf einer dritten Anbauwelle 23 gemäß Fig. 8.1, die wiederum mit dem nicht sichtbaren Wellende 6 des Rumpfmotors 1 verbunden ist, wobei die Gebereinrichtung 21 auf einem Wellenende 23.1 der dritten Anbauwelle 23 angeordnet ist.

Bei dieser Ausführung ist die Gebereinrichtung 21 mittels einer zweiten Drehmomentstütze 27 verdrehsicher am Lagerschild 5.2 des Rumpfmotors 1 angebaut. Der Fremdlüfter 13 ist in axialer Richtung an der Innenseite einer fünften Lüfterhaube 24 angebracht, die der Gebereinrichtung 21 gegenüberliegt. Die fünfte Lüfterhaube 24 umgibt die Bremsvorrichtung 15, die Gebereinrichtung 21 und den Fremdlüfter 13 und ist wiederum an den Befestigungsschrauben 7 des Lagerschildes 5.2 des Rumpfmotors 1 über eine Bajonett-Befestigung montiert.

Eine weitere Motorvariante ist in Fig. 9 gezeigt, wobei als Anbauteile die Bremsvorrichtung 15 und der Eigenlüfter 11 für die Eigenbelüftung auf einer vierten Anbauwelle 25 gemäß Fig. 9.1 angeordnet sind. Die vierte Anbauwelle 25 ist mit dem Wellenende 6 des Rumpfmotors 1 vorzugsweise durch Press/Klebeverbindung verbunden. Dabei ragt ein Wellenende 25.1 der vierten Anbauwelle 25 oder auch ein sogenanntes zweites Motorwellenende aus der mit einer Bohrung 18.5 versehenen dritten Lüfterhaube 18.3 hervor. Die Lüfterhaube 18.3 umgibt die Bremsvorrichtung 15 und den Eigenlüfter 11 und ist wiederum an den Befestigungsschrauben 7 des Lagerschildes 5.2 des Rumpfmotors 1 über eine Bajonett-Befestigung montiert. Das Wellenende 25.1 der vierten Anbauwelle 25 dient zum Aufsetzen von wahlweisen Zusatzteilen, wie beispielsweise einem Handrad oder einer Kurbel usw., für ein manuelles Positionieren oder zum kundenseitigen Anbau einer Drehzahlüberwachung oder zum Antreiben von Hilfsaggregaten, wie einer Kühlmittelpumpe und dergleichen.

In Fig. 10 ist eine weitere Motorvariante mit den Anbauteilen Gebereinrichtung 21 und Eigenlüfter 11 gezeigt, wobei der Eigenlüfter 11 auf dem Wellenende 6 des Rumpfmotors 1 angeordnet ist. Eine fünfte Anbauwelle 28 gemäß Fig. 10.1 ist vorzugsweise durch Press-/Klebeverbindung mit dem Wellenende 6 des Rumpfmotors 1 verbunden. Die fünfte Anbauwelle 28 weist ein Wellenende 28.1 auf, auf dem die Gebereinrichtung 21 angeordnet ist. Das Gehäuse 21.2 der Gebereinrichtung 21 ist mittels der ersten Drehmomentstütze 26 verdrehsicher an einer ersten Lüfterhaube 12.1, die mit einer Bohrung 12.2 versehen ist, angebaut. Die Gebereinrichtung 21 ist unter der Geberschutzhaube 21.1 geschützt angebaut, die ihrerseits an der Lüfterhaube 12.1 montiert ist. Die Lüfterhaube 12.1 ist mit der Bohrung 12.2 für den Durchtritt der fünften Anbauwelle 28 ausgeführt. Die Lüfterhaube 12.1 schützt den Eigenlüfter 11 und ist wiederum mit den Befestigungsschrauben 7 des Lagerschildes 5.2 des Rumpfmotors 1 über eine Bajonett-Befestigung montiert.

Als weiteres Ausführungsbeispiel ist in Fig. 11 eine Motorvariante mit den Anbauteilen Gebereinrichtung 21 sowie Fremdlüfter 13 mit Klemmenkasten 13.1 gezeigt. Bei dieser Anordnung sitzt die Gebereinrichtung 21 auf der fünften Anbauwelle 28 gemäß Fig. 11.1 entsprechend Fig. 10.1, die wiederum mit dem Wellende 6 des Rumpfmotors 1 vorzugsweise durch Press-/Klebeverbindung verbunden ist, wobei die Gebereinrichtung 21 auf dem Wellenende 28.1 der fünften Anbauwelle 28 angeordnet ist. Bei dieser Ausführung ist die Gebereinrichtung 21 mittels der zweiten Drehmomentstütze 27 verdrehsicher am Lagerschild 5.2 des Rumpfmotors 1 angebaut. Der Fremdlüfter 13 ist in axialer Richtung an der Innenseite der fünften Lüfterhaube 24 angebracht, die der Gebereinrichtung 21 gegenüberliegt. Die Lüfterhaube 24 ist wiederum an den Befestigungsschrauben 7 des Lagerschildes 5 des Rumpfmotors 1 über eine Bajonett-Befestigung montiert.

Eine weitere Motorvariante ist in Fig. 12 gezeigt, wobei als Anbauteil der Eigenlüfter 11 für die Eigenbelüftung auf einer sechsten Anbauwelle 29 gemäß Fig. 12.1 angeordnet ist. Die Anbauwelle 29 ist mit dem Wellenende 6 des Rumpfmotors 1 vorzugsweise durch Press-/Klebeverbindung verbunden. Dabei ragt ein Wellenende 29.1 der Anbauwelle 29 aus der mit einer Bohrung 12.2 versehenen ersten Lüfterhaube 12.1 hervor, die den Eigenlüfter 11 schützend umgibt und wiederum an den Befestigungsschrauben 7 des Lagerschildes 5.2 des Rumpfmotors 1 über eine Bajonett-Befestigung montiert ist. Das Wellenende 29.1 dient als sogenanntes zweites Motorwellenende zum Aufsetzen von wahlweisen Zusatzteilen, wie beispielsweise einem Handrad oder einer Kurbel usw., für ein manuelles Positionieren oder zum kundenseitigen Anbau einer Drehzahlüberwachung oder zum Antreiben von Hilfsaggregaten, wie einer Kühlmittelpumpe und dergleichen.

Die vorliegenden Ausführungsbeispiele beziehen sich zwar alle auf eine Motorreihe, aber die Ausführungsbeispiele sind in offensichtlicher Weise ebenfalls allgemein auf Baureihen für drehende elektrische Maschinen , wie beispielsweise Generatoren, anwendbar.

## Patentansprüche

1. Motorreihe, insbesondere zum Anbau an Getriebe, für Wechselstrommotoren in verschiedenpoliger Ausführung und in unterschiedlichen Leistungsklassen, Spannungsklassen und Frequenzklassen umfassend jeweils ein Motorgehäuse (2) mit angeformten Rippen (3) und einen Motor-Klemmenkasten (8) mit einem Klemmenbrett (9) für den Anschluß einer Spannung für die Versorgung von im Motorgehäuse rotationssymmetrisch untergebrachten Statorwicklungen mit Spannung und einen Rotor, der mit seiner Welle in Lagerschilden (5.1; 5.2) und innerhalb des Motorgehäuses mit kleinstem Abstand zu den Statorwicklungen drehbar gelagert ist, mit einer Antriebsseite als Getriebeschnittstelle (4) und einer Nichtantriebsseite oder Belüftungsseite, **dadurch gekennzeichnet, daß** die Motorreihe jeweils aus einem Rumpfmotor (1) als Grundmodul aufgebaut ist, daß ein nichtantriebsseitiges Einheits-Motor-Wellenende (6) des Rumpfmotors (1) für verschiedene Anbauwellen (16, 22, 23, 25,28,29) ausgelegt ist, daß auf den verschiedenen Anbauwellen (16, 22, 23, 25,28,29) verschiedenartige Anbauteile und Zusatzteile angeordnet sind und daß das nichtantriebseitige Lagerschild (5.2) des Rumpfmotors (1) mit Befestigungsschrauben (7) für die Montage unterschiedlicher Lüfterhauben (12,14,18,19,24) ausgerüstet ist.

2. Motorreihe nach Anspruch 1, **dadurch gekennzeichnet, daß** auf dem Wellenende (6) des Rumpfmotors (1) als Anbauteil ein Eigenlüfter (11) angeordnet ist, daß eine erste Lüfterhaube (12) den Eigenlüfter (11) umgibt und daß die erste Lüfterhaube (12) an den Befestigungsschrauben (7) des Lagerschildes (5.2) des Rumpfmotors (1) über eine Bajonett-Befestigung montiert ist.

3. Motorreihe nach Anspruch 1, **dadurch gekennzeichnet, daß** als Anbauteil an der dem Wellenende (6) des Rumpfmotors (1) gegenüberliegenden Innenseite einer zweiten Lüfterhaube (14) ein Fremdlüfter (13) angebracht ist, daß die zweite Lüfterhaube (14) den Fremdlüfter (13) umgibt und daß die zweite Lüfterhaube (14) an den Befestigungsschrauben (7) des Lagerschildes (5.2) des Rumpfmotors (1) über eine Bajonett-Befestigung montiert ist.

4. Motorreihe nach Anspruch 1, **dadurch gekennzeichnet, daß** eine Bremsvorrichtung (15) und ein Eigenlüfter (11) als Anbauteile auf einer ersten Anbauwelle (16) angeordnet sind, wobei die Anbauwelle (16) mit dem Wellenende (6) des Rumpfmotors (1) verbunden ist, und daß eine dritte Lüfterhaube (18.1) die Bremsvorrichtung (15) und den Eigenlüfter (11) umgibt und an den Befestigungsschrauben (7) des Lagerschildes (5.2) des Rumpfmotors (1) über eine Bajonett-Befestigung montiert ist.

5. Motorreihe nach Anspruch 4, **dadurch gekennzeichnet, daß** die Bremsvorrichtung (15) mit einem Handlüfthebel (17) zum manuellen Lüften anstelle des sonst üblichen Lüftens der Bremsvorrichtung auf elektromagnetischem Wege ausgestattet ist, wobei der Handlüfthebel (17) in einem Schlitz (18.2) der dritten Lüfterhaube (18.1) geführt ist und aus der dritten Lüfterhaube herausragt.

6. Motorreihe nach Anspruch 1, **dadurch gekennzeichnet, daß** eine Bremsvorrichtung (15) auf dem Wellenende (6) des Rumpfmotors (1) als Anbauteil und ein Fremdlüfter (13) angeordnet sind, wobei der Fremdlüfter (13) an der Innenseite einer vierten Lüfterhaube (19) in axialer Lage gegenüber der Bremsvorrichtung (15) angebracht ist, daß die vierte Lüfterhaube (19) die Bremsvorrichtung (15) und den Fremdlüfter (13) umgibt und an den Befestigungsschrauben (7) des Lagerschildes (5.2) des Rumpfmotors (1) über eine Bajonett-Befestigung montiert ist.

7. Motorreihe nach Anspruch 1, **dadurch gekennzeichnet, daß** eine Rücklaufsperre (20) und ein Eigenlüfter (11) als Anbauteile auf einer ersten Anbauwelle (16) angeordnet sind, wobei die erste Anbauwelle (16) mit dem Wellenende (6) des Rumpfmotors (1) verbunden ist, und daß eine die Rücklaufsperre (20) und den Eigenlüfter (11) umgebende dritte Lüfterhaube (18) an den Befestigungsschrauben (7) des Lagerschildes (5) des Rumpfmotors (1) über eine Bajonett-Befestigung montiert ist.

8. Motorreihe nach Anspruch 1, **dadurch gekennzeichnet, daß** als Anbauteile eine Bremsvorrichtung (15), ein Eigenlüfter (11) und eine Gebereinrichtung (21) auf einer zweiten Anbauwelle (22) hintereinander angeordnet sind, wobei die zweite Anbauwelle (22) mit dem Wellenende (6) des Rumpfmotors (1) verbunden ist, daß ein Wellenende (22.1) der zweiten Anbauwelle (22) mit der darauf angeordneten Gebereinrichtung (21) aus einer dritten Lüfterhaube (18.3) durch eine Bohrung (18.4) herausragt, daß Gebergehäuse (21.2) der Gebereinrichtung (21) mittels einer ersten Drehmomentstütze (26) an der dritten Lüfterhaube (18.3) verdrehgesichert angebracht ist, daß die dritte Lüfterhaube (18.3) die Bremsvorrichtung (15) und den Eigenlüfter (11) umgibt und an den Befestigungsschrauben (7) des Lagerschildes (5.2) des Rumpfmotors 1 über eine Bajonett-Befestigung montiert ist und daß die Gebereinrichtung (21) unter einer Geberschutzhaube (21.1) geschützt angebaut ist, die ihrerseits an der Lüfterhaube (18.3) befestigt ist.

9. Motorreihe nach Anspruch 1, **dadurch gekennzeichnet, daß** als Anbauteile eine Bremsvorrichtung (15) und eine Gebereinrichtung (21) auf einer dritten Anbauwelle (23) und ein Fremdlüfter (13) angeordnet sind, wobei die dritte Anbauwelle (23) mit dem Wellenende (6) des Rumpfmotors (1) verbunden ist, daß die Gebereinrichtung (21) auf einem Wellenende (23.1) der dritten Anbauwelle (23) befestigt ist, daß der Fremdlüfter (13) in axialer Richtung an der der Gebereinrichtung (21) gegenüberliegenden Innenseite einer die Bremsvorrichtung (15), die Gebereinrichtung (21) und den Fremdlüfter (13) umgebenden fünften Lüfterhaube (24) angebracht ist und daß die fünfte Lüfterhaube (24) an den Befestigungsschrauben (7) des Lagerschildes (5.2) des Rumpfmotors 1 über eine Bajonett-Befestigung montiert ist.

10. Motorreihe nach Anspruch 1, **dadurch gekennzeichnet, daß** eine Bremsvorrichtung (15) und ein Eigenlüfter (11) als Anbauteile auf einer vierten Anbauwelle (25) angeordnet sind, wobei die Anbauwelle (25) mit dem Wellenende (6) des Rumpfmotors (1) verbunden ist, daß ein Wellenende (25.1) der vierten Anbauwelle (25) aus einer dritten Lüfterhaube (18.3) durch eine Bohrung (18.5) herausragt, daß die dritte Lüfterhaube (18.3)die Bremsvorrichtung (15) und den Eigenlüfter (11) schützend umgibt und an den Befestigungsschrauben (7) des Lagerschildes (5.2) des Rumpfmotors 1 über eine Bajonett-Befestigung montiert ist und daß das Wellenende (25.1) der vierten Anbauwelle (25) oder ein zweites Motorwellenende zum Aufsetzen von wahlweisen Zusatzteilen, wie einem Handrad oder einer Kurbel für ein manuelles Positionieren oder zum kundenseitigen Anbau einer Drehzahlüberwachung oder zum Antreiben von Hilfsaggregaten wie einer Kühlmittelpumpe und dergleichen vorgesehen ist.

11. Motorreihe nach Anspruch 1, **dadurch gekennzeichnet, daß** ein Eigenlüfter (11) und eine Gebereinrichtung (21) als Anbauteile auf einer fünften Anbauwelle (28) hintereinander angeordnet sind, wobei die fünfte Anbauwelle (28) mit dem Wellenende (6) des Rumpfmotors (1) verbunden ist, daß ein Wellenende (28.1) der fünften Anbauwelle (28) mit der darauf angeordneten Gebereinrichtung (21) aus einer ersten Lüfterhaube (12.1) durch eine Bohrung (12.2) herausragt, daß an der ersten Lüfterhaube (12.1) ein Gebergehäuse (21.2) der Gebereinrichtung (21) über eine erste Drehmomentstütze (26) verdrehgesichert angebracht ist, daß die Gebereinrichtung (21) unter einer Geberschutzhaube (21.1) geschützt angebaut ist, die ihrerseits an der ersten Lüfterhaube (12.1) befestigt ist und daß die Lüfterhaube (12.1) den Eigenlüfter (11) umgibt und an den Befestigungsschrauben (7) des Lagerschildes (5.2) des Rumpfmotors 1 über eine Bajonett-Befestigung montiert ist.

12. Motorreihe nach Anspruch 1, **dadurch gekennzeichnet, daß** als Anbauteile eine Gebereinrichtung (21) auf einer fünften Anbauwelle (28) und ein Fremdlüfter (13) angeordnet sind, wobei die fünfte Anbauwelle (28) mit dem Wellenende (6) des Rumpfmotors (1) verbunden ist, daß die Gebereinrichtung (21) auf einem Wellenende (28.1) der fünften Anbauwelle (28) befestigt und mittels einer zweiten Drehmomentstütze (27) verdrehgesichert angebaut ist, daß der Fremdlüfter (13) in axialer Richtung an der der Gebereinrichtung (21) gegenüberliegenden Innenseite einer fünften Lüfterhaube (24) angebracht ist, daß die fünfte Lüfterhaube (24) die Gebereinrichtung (21) und den Fremdlüfter (13) umgibt und daß die fünfte Lüfterhaube (24) an den Befestigungsschrauben (7) des Lagerschildes (5.2) des Rumpfmotors 1 über eine Bajonett-Befestigung montiert ist.

13. Motorreihe nach Anspruch 1, **dadurch gekennzeichnet, daß** ein Eigenlüfter (11) als Anbauteil auf einer sechsten Anbauwelle (29) angeordnet ist, wobei die sechste Anbauwelle (29) mit dem Wellenende (6) des Rumpfmotors (1) verbunden ist, daß ein Wellenende (29.1) der sechsten Anbauwelle (29) oder ein zweites Motorwellenende aus einer dritten Lüfterhaube (18.3) durch eine Bohrung (18.5) herausragt, daß die dritte Lüfterhaube (18.3) den Eigenlüfter (11) umgibt und an den Befestigungsschrauben (7) des Lagerschildes (5.2) des Rumpfmotors (1) über eine Bajonett-Befestigung montiert ist und daß das Wellenende (29.1) der sechsten Anbauwelle (29) zum Aufsetzen von wahlweisen Zusatzteilen, wie einem Handrad oder einer Kurbel für ein manuelles Positionieren oder zum kundenseitigen Anbau einer Drehzahlüberwachung oder zum Antreiben von Hilfsaggregaten wie einer Kühlmittelpumpe und dergleichen vorgesehen ist.

14. Motorreihe nach Anspruch 1, **dadurch gekennzeichnet daß** die Befestigungsschrauben (7) als Multiturn-Schrauben ausgeführt und im Lagerschild (5.2) des Rumpfmotors (1) vormontiert sind.

15. Motorreihe nach Anspruch 1, **dadurch gekennzeichnet, daß** der Rumpfmotor (1) mit einem Motorklemmenkasten (8) ausgerüstet ist, der um jeweils 90° drehbar angeordnet ist.

16. Motorreihe nach Anspruch 1, **dadurch gekennzeichnet, daß** die Motorreihe als Baukasten aufgebaut ist, der einen Rumpfmotor (1) mit einem Einheits-Wellenende (6) umfaßt, das für verschiedene Anbauwellen (16, 22, 23, 25, 28, 29) ausgelegt ist, wobei auf den verschiedenen Anbauwellen (16, 22, 23, 25, 28, 29) verschiedenartige Anbauteile und Zusatzteile angeordnet sind und das Lagerschild (5.2) auf der Nichtantriebsseite des Rumpfmotors (1) mit Befestigungsschrauben (7) für die Montage unterschiedlicher Lüfterhauben (12, 14, 18, 19, 24) ausgerüstet ist.

17. Baureihe für drehende elektrische Maschinen, insbesondere Wechselstrommotoren zum Anbau an Getriebe, in verschiedenpoliger Ausführung und in unterschiedlichen Leistungsklassen, Spannungsklassen und Frequenzklassen umfassend jeweils ein Gehäuse (2) mit angeformten Rippen (3) und einen Klemmenkasten (8) mit einem Klemmenbrett (9) für den Anschluß oder Abgriff einer Spannung von im Gehäuse rotationssymmetrisch untergebrachten Statorwicklungen und einen Rotor, der mit seiner Welle in Lagerschilden (5.1; 5.2) und innerhalb des Gehäuses mit kleinstem Abstand zu den Statorwicklungen drehbar gelagert ist, mit einer Antriebsseite und einer Nichtantriebsseite oder Belüftungsseite, **dadurch gekennzeichnet, daß** die Baureihe jeweils aus einem Rumpfkörper (1) als Grundmodul aufgebaut ist, daß ein nichtantriebsseitiges Einheits-Wellenende (6) des Rumpfkörpers (1) für verschiedene Anbauwellen (16, 22, 23, 25, 28, 29) ausgelegt ist, daß auf den verschiedenen Anbauwellen (16, 22, 23, 25, 28, 29) verschiedenartige Anbauteile und Zusatzteile angeordnet sind und daß das nichtantriebseitige Lagerschild (5.2) des Rumpfkörpers (1) mit Befestigungsschrauben (7) für die Montage unterschiedlicher Lüfterhauben (12, 14, 18, 19, 24) ausgerüstet ist.
